Europäisches Patentamt

European Patent Office

Office européen des brevets

(19)

(11) Veröffentlichungsnummer: **0 306 832**
**A2**

## (12) EUROPÄISCHE PATENTANMELDUNG

(21) Anmeldenummer: 88114265.7

(22) Anmeldetag: 01.09.88

(51) Int. Cl.⁴: **B29B 7/76**

(30) Priorität: 11.09.87 DE 3730472

(43) Veröffentlichungstag der Anmeldung:
15.03.89 Patentblatt 89/11

(84) Benannte Vertragsstaaten:
AT BE CH DE ES FR GB GR IT LI LU NL SE

(71) Anmelder: Battenfeld GmbH
Scherl 10
D-5882 Meinerzhagen(DE)

(72) Erfinder: Langecker, Günter, Dr.-Ing.
Beethovenstrasse 26
D-5882 Meinerzhagen 1(DE)
Erfinder: Feist, Norbert, Dipl.-Ing.
In der Delle 3
D-5912 Hilchenbach(DE)

(74) Vertreter: Müller, Gerd et al
Patentanwälte
HEMMERICH-MÜLLER-GROSSE-POLLMEIER--
MEY-VALENTIN Hammerstrasse 2
D-5900 Siegen 1(DE)

(54) **Mischkopf zum Vermischen mindestens zweier Kunststoff-Komponenten, die bei ihrer Reaktion Schaumstoff bilden.**

(57) Es wird ein Mischkopf 21 zum Vermischen von mindestens zwei bei ihrer chemischen Reaktion Schaumstoff bildenden Komponenten aus Kunststoff mit einer Mischkammer 23 so ausgebildet, daß mit geringem baulichen Aufwand eine optimale Nachvermischung des Komponentengemisches herbeigeführt wird, bevor dieses in die Form gelangen kann. Die Kunststoffkomponenten werden durch Eintrittsöffnungen 24, 25 der Mischkammer 23 zugeführt, aus welcher das Komponentengemisch durch eine Austrittsöffnung 31 und einem Führungskanal 29 in die Form gelangt. Sowohl der Mischkammer 23 als auch dem an deren Austrittsöffnung 31 anschließenden Führungskanal 29 ist ein axial verschiebbarer Ausstoßkolben bzw. Reinigungsstößel 26 zugeordnet.

Maßgebend für die angestrebte Arbeitsweise ist, daß Mischkammer 23 und Führungskanal 29 eine zueinander achsparallele Ausrichtung haben, daß zwischen der Austrittsöffnung 31 der Mischkammer 23 und der Eintrittsöffnung 32 des Führungskanals 29 sich mindestens eine Nachmisch- bzw. Wirbelkammer 38a, 38b befindet, die eine im wesentlichen quer zu den Achsen von Mischkammer 23 und Führungskanal 29 gerichtete Anordnung hat, und daß dabei die Länge und/oder die Lage der Nachmischbzw. Wirbelkammer 38a, 38 b relativ zur Mischkammer 23 und Führungskanal 29 veränderbar sind.

Fig.4

## Mischkopf zum Vermischen mindestens zweier Kunststoff-Komponenten, die bei ihrer Reaktion Schaumstoff bilden

Die Erfindung betrifft einen Mischkopf zum Vermischen mindestens zweier bei ihrer Reaktion Schaumstoff bildender Komponenten aus Kunststoff mit einer Mischkammer, der die Kunststoffkomponenten durch Eintrittsöffnungen zugeführt werden und aus welcher das Komponentengemisch durch eine Austrittsöffnung und einen Führungskanal in eine Form gelangt, wobei sowohl der Mischkammer als auch dem an deren Austrittsöffnung anschließenden Führungskanal ein axial verschiebbarer Ausstoßkolben bzw. Reinigungsstößel zugeordnet ist.

Mischköpfe dieser Art sind in verschiedener Bauart bereits bekannt, wie bspw. aus der DE-PS 23 27 269 und der DE-PS 26 12 812 hervorgeht.

Der durch die DE-PS 23 27 269 bekanntgewordene Mischkopf ist mit einem sich inbesondere unter einem rechten Winkel an die Austrittsöffnung der Mischkammer anschließenden, der Form zugewendeten Führungskanal für das Komponentengemisch ausgestattet und benötigt dabei einerseits für das Austreiben des Komponentengemisches aus der Mischkammer einen Ausstoßkolben sowie andererseits zum Reinigen des der Form zugewendeten Führungskanals noch einen zusätzlichen Reinigungsstößel.

Demgegenüber haben beim Mischkopf nach der DE-PS 26 12 812 die Mischkammer und der Führungskanal Achsfluchtlage zueinander, mit dem Vorteil, daß hier der Ausstoßkolben für die Mischkammer und der Reinigungsstößel für den Führungskanal baulich und funktionell vereinigt werden können.

Während jedoch bei dem Mischkopf nach der DE-PS 23 27 269 der für eine gute Vermischung der Kunststoffkomponenten erforderliche Druckaufbau in der Mischkammer sowie auch die Nachvermischung des Komponentengemisches bei dessen Übertritt aus der Mischkammer in den Führungskanal durch axiale Lageveränderung der Stirnfläche des Reinigungsstößels relativ zur Austrittsöffnung der Mischkammer und zur Eintrittsöffnung des Führungskanals beeinflußt werden kann, ist nach der DE-PS 26 12 812 zwischen der Austrittsöffnung der Mischkammer und der Eintrittsöffnung des Führungskanals ein besonderes Dreosselorgan zur Einstellung des Mischkammerdruckes zur Beeinflussung der Nachvermischung erforderlich.

In beiden Fällen ist es jedoch nachteilig, daß der Vorgang der Nachvermischung außerhalb der Mischkammer nicht ohne Rückwirkung auf den Mischkammerdruck beeinflußt werden kann.

Aufgabe der Erfindung ist es, einen Mischkopf der anfangs näher spezifizierten Gattung zu schaffen, der eine problemlose Anpassung der Nachvermischung an unterschiedliche Bedürfnisse ohne wesentliche Rückwirkungen auf den Druck in der Mischkammer ermöglicht. Dabei soll zugleich ein minimaler baulicher Aufwand des Mischkopfes für das Ausstoßen des Komponentengemisches aus der Mischkammer und zum Reinigen des an die Mischkammer anschließenden Führungskanals angestrebt werden.

Erreicht wird dieses Ziel erfindungsgemäß - nach dem Kennzeichen des Anspruchs 1 - dadurch, daß Mischkammer und Führungskanal eine zueinander achsparallele Ausrichtung haben, daß zwischen der Austrittsöffnung der Mischkammer und der Eintrittsöffnung des Führungskanals sich mindestens eine Nachmisch- bsw. Wirbelkammer befindet, die eine im wesentlichen quer zu den Achsen von Mischkammer und Führungskanal gerichtete Anordnung hat, und daß dabei die Länge und/oder Lage der Nachmisch- bzw. Wirbelkammer relativ zur Mischkammer und Führungskanal veränderbar sind.

Durch diese Ausgestaltung eines Mischkopfes wird dem aus der Mischkammer austretenden Komponentengemisch vor seinem Eintritt in den Führungskanal eine mehrfache, nämlich mindestens zweifache, rechtwinklige Strömungsablenkung aufgezwungen, so daß sich gewissermaßen ein zick-zack-förmiger Strömungsweg ergibt, dessen Durchströmstrecke hinsichtlich ihrer Länge zweckentsprechend variiert werden kann. Die Wirbelbildung innerhalb des Komponentengemisches und damit dessen Nachvermischung wird daher vor der sich im Führungskanal einstellenden Strömungsberuhigung bzw. Laminarisierung intensiviert.

Bewährt hat es sich nach der Erfindung ganz besonders, wenn - gemäß Anspruch 2 - Länge und/oder Lage jeder Nachmisch- bzw. Wirbelkammer durch mindestens einen quer zur Mischkammer verstellbaren Schieber veränderbar sind.

Auch ist - nach Anspruch 3 - erfindungsgemäß vorgesehen, daß Mischkammer und Führungskanal einen in Form und Abmessungen übereinstimmenden Querschnitt haben und ihnen ein und derselbe Ausstoßkolben bzw. Reinigungsstößel zugeordnet ist.

In bevorzugter Weise kann erfindungsgemäß - nach Anspruch 4 - jede Mischkammer durch einen Schlitzkanal und eine in diesen verschiebbar bzw. gleitbeweglich eingreifende Zunge bestimmt werden. Hierbei hat es sich bewährt, wenn die Breite des Schlitzkanals und damit auch die Dicke der in diesen eingreifenden Zunge kleiner bemessen wird als die Querschnittsabmessung der Mischkammer und des Führungskanals in gleicher Richtung.

Eine besonders vorteilhafte Bauform des Mischkopfes ergibt sich nach der Erfindung dadurch, daß - gemäß Anspruch 5 - der Schlitzkanal sich in Radialrichtung an die Austrittsöffnung der Mischkammer bspw. im Gehäuse anschließt, während die Zunge in radialem Anschluß an den Querschnitt des Führungskanals, z.B. am Schieber, über dessen Eintrittsöffnung vorspringt. Gleichermaßen besteht aber auch die Möglichkeit, daß der Schlitzkanal sich in Radialrichtung an die Eintrittsöffnung des Führungskanals im Schieber anschließt, während umgekehrt die Zunge im radialen Anschluß an den Querschnitt der Mischkammer über deren Austrittsöffnung vorspringt.

Bei einer möglichen Bauform des erfindungsgemäßen Mischkopfes ist es - nach Anspruch 6 - zweckmäßig, daß die Mischkammer sich in einem ortsfesten Gehäuses befindet, während der Führungskanal in dem relativ zu diesem Gehäuse verstellbaren Schieber angeordnet ist.

Andererseits kann es sich aber - nach Anspruch 7 - auch als vorteilhaft erweisen, wenn erfindungsgemäß die Mischkammer und der Führungskanal sich in einem ortsfesten Gehäuse befinden und darin Achsfluchtlage zueinander haben, während der Schieber lediglich einen dazu achsparallelen Verbindungskanal enthält, über den zwischen der Mischkammer und dem Führungskanal zwei Nachmischkammern hintereinanderschaltbar sind. Der Verwirbelungs- und Nachmischeffekt wird durch eine solche Ausgestaltung besonders intensiviert.

Bei der letztgenannten Bauform eines Mischkopfes dürfte es sich als ganz besonders vorteilhaft erweisen, wenn nach der Erfindung - gemäß Anspruch 8 - die beiden Nachmischkammern symmetrisch zu einer Querebene des Schiebers angeordnet sind, wobei sich eine derselben radial an die Austrittsöffnung der Mischkammer anschließt, während die andere radial in die Eintrittsöffnung des Führungskanals einmündet.

Im Rahmen der Erfindung liegt es in jedem Falle, daß - gemäß Anspruch 9 - der Schieber durch einen am Gehäuse gehaltenen Linearantrieb, insbesondere eine mit Druckmittel beaufschlagbare Kolben-Zylinder-Einheit, verstellbar ist. Es kann dann in vorteilhafter Weise - nach Anspruch 10 - der Linearantrieb für den Schieber außer in seinen beiden Endlagen auch in verschiedenen, vorzugsweise beliebigen, Zwischenstellungen blockierbar ausgelegt sein, damit sich die Länge bzw. das Volumen der Nachmisch- bzw. Wirbelkammern problemlos auf unterschiedliche Bedingungen abstimmen läßt.

Eine andere zweckmäßige Weiterbildung eines erfindungsgemäßen Mischkopfes ergibt sich dann, wenn - nach Anspruch 11 - die Zunge der oder jeder Nachmischkammer relativ zum Schieber und parallel zu dessen Bewegungsrichtung ein- und/oder verstellbar angeordnet ist. Diese Maßnahme ist in besonderer Weise zu empfehlen, wenn es - nach Anspruch 12 - darauf ankommt, daß die Zunge am Schieber relativ zur Eintrittsöffnung des Führungskanals ein- und/oder verstellbar angeordnet ist, weil sich dadurch nämlich - entsprechend dem Anspruch 13 - der Querschnitt der Eintrittsöffnung des Führungskanals zweckentsprechend verändern und vorjustieren läßt.

Eine empfehlenswerte Weiterbildungsmaßnahme besteht erfindungsgemäß - nach Anspruch 14 - auch noch darin, daß die Zunge in ihrer jeweiligen Einstellage zur Eintrittsöffnung des Führungskanals im Sinne einer Vergrößerung des Öffnungsquerschnitts elastisch nachgiebig, insbesondere federnd, am Schieber abgestützt ist. Wenn dann nämlich - gemäß Anspruch 15 - der Zunge der oder jeder Nachmischkammer am ortsfesten Gehäuse ein Widerlageranschlag zugeordnet ist, der die Zunge im Bereich zwischen der Mischkammer und dem Führungskanal außerhalb der Bewegungsbahn des Ausstoßkolbens bzw. Reinigungsstößels hält, dann wird hierdurch sichergestellt, daß der Arbeitsvorschub des Reinigungsstößels zu keinem Zeitpunkt behindert oder beeinträchtigt werden kann.

Die elastisch nachgiebige Abstützung der Zunge hat darüber hinaus aber auch den Vorteil, daß hierdurch ein vorbestimmtes Druckniveau in dem durch die Nachmisch- bzw. Wirbelkammern strömenden Komponentengemisch aufrechterhalten werden kann, das durch Voreinstellung bestimmbar ist. Wird dieses Druckniveau aber zeitweilig überschritten, dann kann sich die Zunge entgegen der auf sie einwirkenden Vorspannkraft verlagern und dadurch das Druckniveau entsprechend absenken.

Nach der Erfindung ist für den Mischkopf aber noch eine weitere Bauform möglich, wobei sich diese - nach Anspruch 16 - besonders dadurch auszeichnet, daß die Zunge der oder jeder Nachmischkammer einen Teil eines zweiten Schiebers bildet und mittels diesem im Schlitzkanal unabhängig von der Betätigung des ersten Schiebers verlagerbar ist. Bei einem solchen Mischkopf kann dabei - gemäß Anspruch 17 - der zweite Schieber durch einen eigenen am Gehäuse gehaltenen Linearantrieb, insbesondere eine mit Druckmittel beaufschlagbare Kolben-Zylinder-Einheit, betätigt werden. Es sollte auch in diesem Falle - nach Anspruch 18 - möglich sein, daß der Linearantrieb für den Schieber außer in seinen beiden Endlagen auch in verschiedenen, vorzugsweise beliebigen Zwischenstellungen blockierbar ist. Es kann dann nämlich - gemäß Anspruch 19 - durch die Zunge der Querschnitt der Eintrittsöffnung des Führungskanals verändert werden. Es ist erfindungsgemäß - nach Anspruch 20 - ebenfalls möglich, der Zunge der oder jeder Nachmisch- bzw. Wirbelkammer am ortsfesten Gehäuse ein Widerlageranschlag zuzuordnen, welcher die Zunge im Bereich zwischen der Mischkammer und dem Führungskanal außerhalb der Bewegungsbahn des Ausstoßkolbens bzw. Reinigungsstößels hält, so daß letzterer bei der Durchführung seines Arbeitshubes nicht behindert wird.

Der erfindungsgemäße Mischkopf wird nachfolgend an in der Zeichnung dargestellten Ausführungsbeispielen näher erläutert. Es zeigen

Figur 1 teilweise in Seitenansicht und teilweise im Längsschnitt eine besonders einfache Bauform eines Mischkopfes,

Figur 2 einen Schnitt längs der Linie II-II in Fig. 1,

Figur 3 einen Schnitt längs der Linie III-III in Fig. 1,

Figur 4 in einer der Fig. 1 entsprechenden Darstellung einer andere Ausbildungsmöglichkeit für einen Mischkopf,

Figur 5 einen Schnitt entlang der Linie V-V in Fig. 4,

Figur 6 einen Schnitt längs der Linie VI-VI in Fig. 4,

Figur 7 teilweise in Seitenansicht und teilweise im Längsschnitt eine gegenüber der Ausführungsform nach Fig. 1 weitergebildete Bauart eines Mischkopfes,

Figur 8 einen Schnitt länge der Linie VIII-VIII in Fig. 7,

Figur 9 einen Schnitt entlang der Linie IX-IX in Fig. 7,

Figur 10 eine weitere Abwandlungsmöglichkeit für einen Mischkopf der in Fig. 1 dargestellten Bauart,

Figur 11 einen Schnitt längs der Linie XI-XI der Fig. 10 und

Figur 12 einen Schnitt längs der Linie XII-XII in Fig. 10.

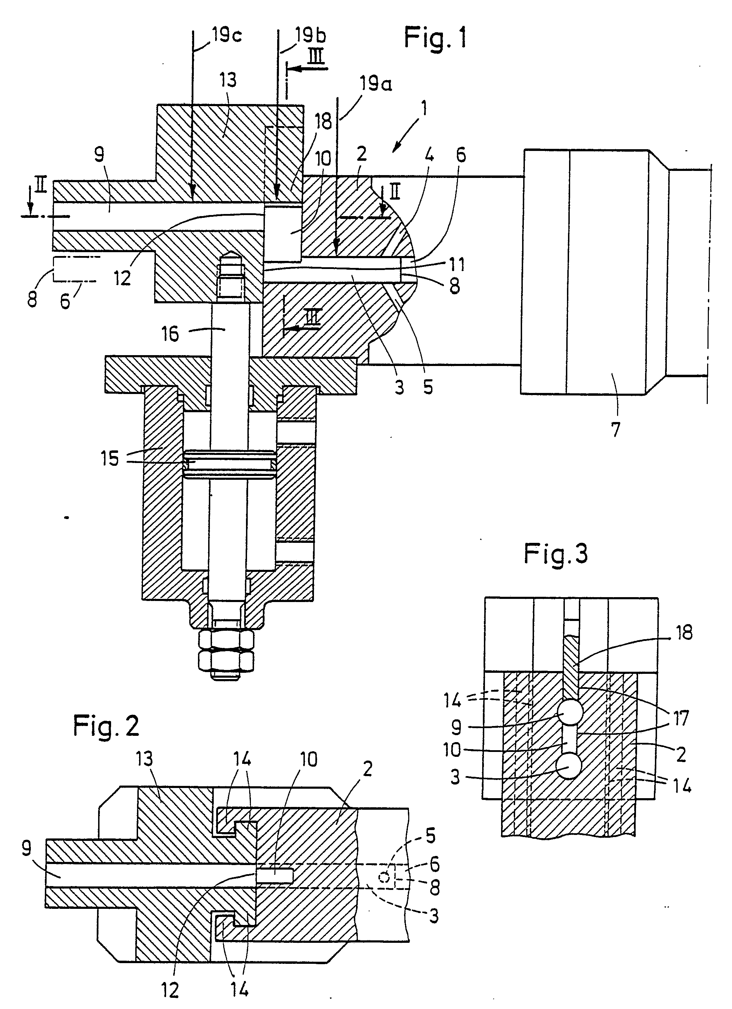

In Figur 1 der Zeichnung ist ein Mischkopf 1 zu sehen, welcher zum Vermischen von midestens zwei Kunststoffkomponenten eingesetzt wird, die bei ihrer chemischen Reaktion einen Schaumstoff bilden. Dieser Mischkopf 1 hat ein Gehäuse 2, in dem sich eine Mischkammer 3 befindet, in die an vorbestimmten Stellen Einlaßöffnungen 4 und 5 für jeder der Kunststoffkomponenten einmünden. Wie Fig. 3 erkennen läßt, hat die Mischkammer 3 bevorzugt einen kreisförmigen Querschnitt und kann daher im Gehäuse 2 bspw. als Bohrung hergestellt werden.

Der Mischkammer 3 ist ein Ausstoßkolben bzw. Reinigungsstößel 6 zugeordnet, der durch einen Linearantrieb 7, bspw. in Form einer durch Druckmittel beaufschlagbaren Kolben-Zylinder-Einheit über eine vorgegebene Wegstrecke axial verschiebbar ist. In seiner zurückgezogenen Schiebestellung, die in Fig. 1 der Zeichnung durch gestrichelte Linien angedeutet ist, liegt die ebene Endfläche 8 des Ausstoßkolbens bzw. Reinigungsstößels 6 in seiner zurückgezogenen Endstellung hinter der Eintrittsebene der beiden Einlaßöffnungen 4 und 5 in die Mischkammer 3. Unter vorbestimmten Bedingungen, die nachfolgend noch beschrieben werden, kann der Ausstoßkolben bzw. Reinigungsstößel 6 mit Hilfe des Linearantriebes 7 aber auch bis in die durch strichpunktierte Linien in Fig. 1 angedeutete Axialstellung vorgeschoben werden.

Der Mischkopf 1 ist im Anschluß an seine Mischkammer 3 weiterhin mit einem Führungskanal 9 für das Komponentengemisch ausgestattet, welcher an die mit dem Komponentengemisch zu versorgende Form herangeführt werden kann. Dieser Führungskanal 9 hat eine Querschnittsform und -abmessung, die mit derjenigen der Mischkammer 3 im Gehäuse übereinstimmt, also bspw. im Querschnitt kreisförmig ist. Hierdurch läßt sich auch der Führungskanal 9 problemlos als Bohrung herstellen.

Mischkammer 3 und Führungskanal 9 haben eine zueinander achsparallele Ausrichtung und stehen miteinander ständig durch eine Nachmisch- bzw. Wirbelkammer 10 in Verbindung. Zu diesem Zweck hat einerseits die Mischkammer 3 eine Austrittsöffnung 11, die sowohl einen axialen als auch einen radialen Öffnungsbereich zur Nachmisch- bzw. Wirbelkammer 10 hin aufweist. Andererseits ist der Führungskanal 9 mit einer an die Nachmisch- bzw. Wirbelkammer 10 anschließenden Eintrittsöffnung 12 versehen, die eine axiale Ausrichtung hierzu hat.

Der Führungskanal 9 für das Komponentengemisch mit seiner Eintrittsöffnung 12 befindet sich in einem Schieber 13, welcher an der Stirnfläche des Gehäuses 2, bspw. durch form schlüssig und hinterschnitten ineinandergreifende Prismenführungen 14 querbeweglich gehalten ist, wie das insbesondere der Fig. 2 entnommen werden kann. Die Führungsteile des Gehäuses 2 bilden dabei miteinander einen etwa C-förmigen Führungsquerschnitt, während die Führungsteile des Schiebers 13 hierzu komplementär passend einen etwa T-förmigen Führungsquerschnitt haben.

Zur Querverstellung des Schiebers 13 relativ zum Gehäuse 2 dient ein Linearantrieb 15, der bspw. aus einer mit Druckmittel beaufschlagbaren Kolben-Zylinder-Einheit besteht und am Gehäuse 2 gehalten ist. Eine Schub- und Zugstange 16 des Linearantriebs 15 greift zur Übertragung der Verstellbewegung seitlich am Schieber 13 an.

Mit Hilfe des Linearantriebs 15 läßt sich der Schieber 13 gegenüber dem Gehäuse 2 zwischen zwei Endstellungen verlagern. In der einen, aus Fig. 1 ersichtlichen Endstellung des Schiebers 13 nimmt der in diesem befindliche Führungskanal 9 für das Komponentengemisch eine zur Mischkammer 3 parallelversetzte Lage ein. In der anderen Endstellung des Schiebers 13 ist jedoch der darin befindliche Führungskanal 9 in Achsfluchtlage zu der im Gehäuse 2 vorgesehenen Mischkammer 3 gesetzt.

Der Linearantrieb 15 ist bevorzugt so ausgelegt, daß mit seiner Hilfe der Schieber 13 nicht nur in die beiden eben genannten Endstellungen bewegt werden kann, sondern darüber hinaus auch noch die Einstellung verschiedener, vorzugsweise beliebiger, Zwischenstellungen ermöglicht. Hierdurch ist erreichbar, daß die Nachmisch- bzw. Wirbelkammer 10 zwischen der Mischkammer 3 und dem Führungskanal 9 hinsichtlich ihres Volumens bzw. in ihrer wirksamen Länge zwischen einem Größtwert und einem Kleinstwert stufenlos variiert werden kann.

Die Fig. 1 und 3 machen deutlich, daß die Nachmisch- bzw. Wirbelkammer 10 sich im wesentlichen quer zu den Längsachsen von Mischkammer 3 und Führungskanal 9 erstreckt und dabei sowohl zum Querschnitt der Mischkammer 3 als auch zum Querschnitt des Führungskanals 9 eine im wesentlichen radiale Ausrichtung hat.

Während bei derjenigen Einstellung des Schiebers 13, in welcher der Führungskanal 9 Achsfluchtlager zur Mischkammer 3 hat, der Ausstoßkolben bzw. Reinigungsstößel 6 mit seinen ebenen Endfläche 8 durch die Mischkammer 3 hindurch bis bündig zum vorderen Ende des Führungskanals 9 vorgeschoben werden kann, wie dies in Fig. 1 durch strichpunktierte Linien angedeutet ist, läßt er sich bei jeder zur Mischkammer 3 parallelversetzten Lage des Führungskanals 9 als Ausstoßkolben für das Komponentengemisch jeweils nur bis zur Ebene der Eintrittsöffnung 12 des Führungskanals 9 innerhalb der Mischkammer 3 vorschieben. Bei jeder parallelversetzten Lage des Führungskanals 9 relativ zur Mischkammer 3 wird dem Komponentengemisch durch die zwischengeschaltete Nachmisch- bzw. Wirbelkammer 10 eine zweifache, jeweils etwa rechtwinklige Strömungsumlenkung aufgezwungen, und zwar einerseits beim Übertritt aus der Austrittsöffnung 11 der Mischkammer 3 in die Nachmisch- bzw. Wirbelkammer 10 sowie andererseits beim Übertritt aus der Nachmisch- bzw. Wirbelkammer 10 in die Eintrittsöffnung 12 des Führungskanals 9.

Gewissermaßen wird also dem Komponentengemisch eine zick-zack-förmige Strömungsbewegung aufgezwungen, wobei die Durchströmstrecke und damit der Nachmisch- bzw. Verwirbelungseffekt im Komponentengemisch durch unterschiedliche Einstellung des Achsversatzes zwischen der Mischkammer 3 und dem Führungskanal 9 den jeweiligen Bedürfnissen entsprechend variierbar ist.

Fig. 3 der Zeichnung macht deutlich, daß die Nachmisch- bzw. Wirbelkammer 10 durch einen in das Gehäuse 2 eingearbeiteten, flachen Schlitzkanal 17 bestimmt wird, der sich in Radialrichtung an die Austrittsöffnung 11 der Mischkammer 3 anschließt und dabei eine Breite hat, die kleiner als der Durchmesser sowohl der Mischkammer 3 als auch des Führungskanals 9 bemessen ist. Mit diesem Schlitzkanal 17 wirkt dabei ein in diesen verschiebbar bzw. gleitbeweglich eingreifende Zunge 18 zusammen, die am Schieber 13 ausgebildet ist und radialen Anschluß an den Querschnitt des Führungskanals 9 über dessen Eintrittsöffnung 12 um ein Maß vorspringt, welches der Einschnittiefe des Schlitzkanals 17 im Gehäuse 2 angepaßt ist, wie das die Fig. 1 erkennen läßt.

Während bei der aus Fig. 1 ersichtlichen Querstellung des Schiebers 13 der die Nachmisch- bzw. Wirbelkammer 10 bildende Schlitzkanal 17 seine größte Wirklänge zwischen der Mischkammer 3 und dem Führungskanal 9 hat, wird bei derjenigen Einstellung des Schiebers 13, bei welcher Mischkammer 3 und Führungskanal 9 Fluchtlage zueinander einnehmen, der Schlitzkanal 17 völlig von der Zunge 18 ausgefüllt. D.h. in diesem Falle ist zwischen Mischkammer 3 und Führungskanal 9 überhaupt keine Nachmisch- bzw. Wirbelkammer 10 vorhanden.

Es leuchtet ohne weiteres ein, daß durch zweckentsprechende Verlagerung der Zunge 18 im Schlitzkanal 17 das Volumen und/oder die Durchströmstrecke der Nachmisch- bzw. Wirbelkammer 10 zwischen dem Wert 0 und einem vorgegebenen größten Maß quasi stufenlos variiert und damit auch auf unterschiedliche Eigenschaften des Komponentengemisches abgestimmt werden kann. Die dabei durch die Nachmisch- bzw. Wirbelkammer 10 erzwungene, zick-zack-förmige Strömungsablenkung des Komponentengemisches führt dabei in jedem Falle eine verbesserte Vermischung desselben herbei, bevor es zum Zwecke der Strömungsberuhigung durch die Eintrittsöffnung 12 in den Führungskanal 9 gelangt.

Es sei noch erwähnt, daß im Mischkopf 1 nach den Fig. 1 bis 3 nicht nur zwei Kunststoffkomponenten durch die Einlaßöffnungen 4 und 5 zusammengeführt und in der Mischkammer 3 miteinander vermischt werden können. Vielmehr besteht auch noch die Möglichkeit, mindestens eine weitere Komponente, bspw. ein Gas, eine Flüssigkeit oder auch Füllstoffe zuzuführen. Die Einlaßöffnung für diese dritte Komponente kann dabei an verschiedenen Stellen innerhalb des Mischkopfes vorgesehen sein. So kann sie bspw. im Bereich der Mischkammer 3 liegen, wie das durch den Pfeil 19a gekennzeichnet ist. Sie kann aber auch der Nachmisch- bzw. Wirbelkammer 10 zugeordnet werden, wie das der Pfeil 19b kenntlich macht. Schließlich läßt sie sich aber auch dem Führungskanal 9 zuordnen, wie das durch den Pfeil 19c angedeutet ist.

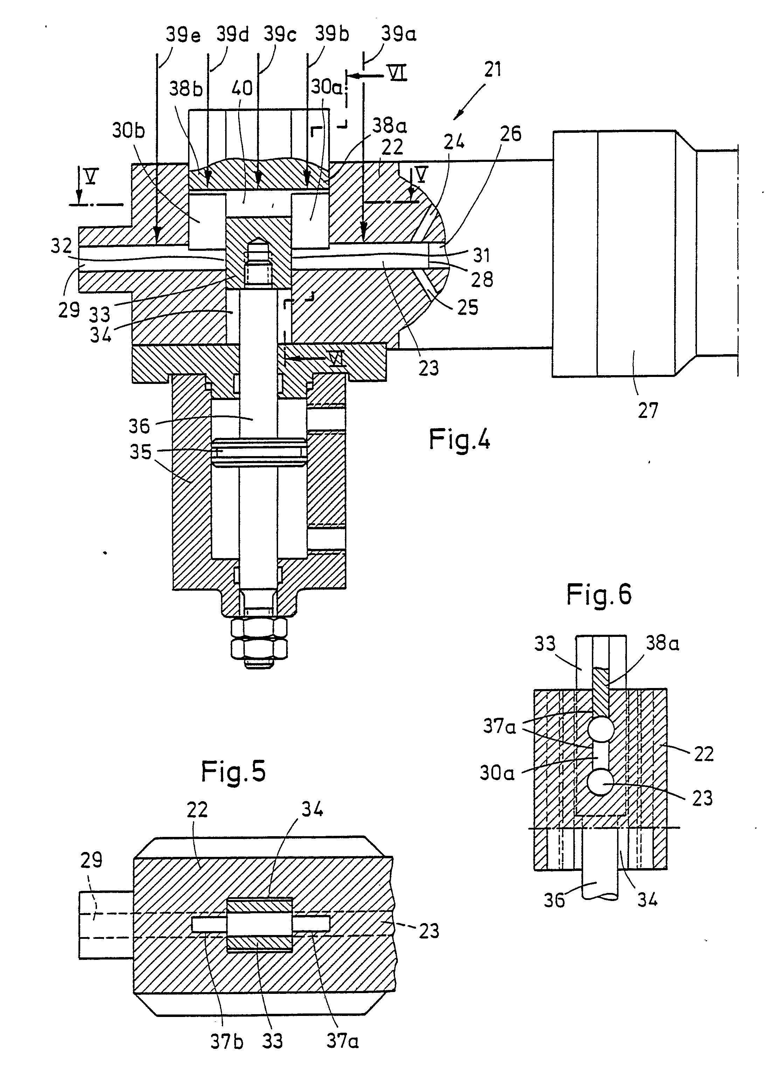

In den Fig. 4 bis 6 der Zeichnung ist ein Ausführungsbeispiel eines Mischkopfes 21 dargestellt, welches sich vom Mischkopf 1 nach den Fig. 1 bis 3 im wesentlichen dadurch unterscheidet, daß nicht nur die Mischkammer 23, sondern auch der Führungskanal 29 in das Gehäuse 22 eingearbeitet ist. Mischkammer 23 und Führungskanal 29 sind dabei in Achsfluchtlage zueinander angeordnet, und zwar dergestalt, daß sich die axial ausgerichteten Abschnitte der Austrittsöffnung 31 an der Mischkammer 23 und die axial ausgerichteten Abschnitte der Eintrittsöffnung 32 am Führungskanal 29 unter einem festliegenden Abstand einander zugewendet sind.

Im Abstandsbereich zwischen der Mischkammer 23 und dem Führungskanal 29 ist im Gehäuse 22 der Schieber 33 querbeweglich gehalten, und zwar in einer Prismenführung 34, die jeweils in den Fig. 4 bis 5 zu sehen ist.

Die Querbewegung des Schiebers 33 in der Prismenführung 34 des Gehäuses 22 ist über einen Linearantrieb 35 steuerbar, der vorzugsweise von einer mit Druckmittel beaufschlagbaren Kolben-Zylinder-Einheit gebildet wird.

Im Gehäuse 22 des Mischkopfes 21 befindet sich einerseits im radialen Anschluß an die Mischkammer 23 eine Nachmisch- bzw. Wirbelkammer 30a, während andererseits im radialen Anschluß an den Führungskanal 29 eine zweite Nachmisch- bzw. Wirbelkammer 30b vorgesehen ist. Beide Nachmisch- bzw. Wirbelkammern 30a und 30b haben dabei eine gemeinsame Radialebene, wobei die Nachmischkammer 30a an die Mischkammer 23 über den radialen Abschnitt der Austrittsöffnung 31 angeschlossen ist und die Nachmisch-bzw. Wirbelkammer 30b über den radialen Abschnitt der Eintrittsöffnung 32 in den Führungskanal 29 mündet. Beide Nachmischkammern 30a und 30b sind jeweils durch einen in das Gehäuse 22 eingearbeiteten, im Querschnitt flach rechteckigen Schlitzkanal 37a bzw. 37b gebildet, dessen Öffnungsbreite jeweils kleiner bemessen ist als der Öffnungsquerschnitt der Mischkammer 23 und des Führungskanals 29, wie das die Fig. 5 und 6 erkennen lassen.

Mit jedem der Schlitzkanäle 37a und 37b wirkt eine im Querschnitt dazu passende, also flach-rechteckige Zunge 38a bzw. 38b zusammen, wobei beide Zungen 38a und 38b gemeinsam am Schieber 33 vorgesehen sind, wie das insbesondere der Fig. 4 entnommen werden kann.

Durch Querverstellung des Schiebers 33 in der Prismenführung 34 des Gehäuses 22 mit Hilfe der Schub- und Zugstange 36 des Linearantriebes 35 können die beiden Zungen 38a und 38b gemeinsam und gleichzeitig innerhalb der die Nachmischbzw. Wirbelkammern 30a und 30b bildenden Schlitzkanäle 37a und 37b verlagert werden, so daß sich deren Volumen und/oder Wirklänge quer zu den Längsachsen von Mischkammer 23 und Führungskanal 29 unterschiedlichen Bedürfnissen entsprechend variieren läßt.

Im Schieber 33 ist vor den die beiden Nachmisch- bzw. Wirbelkammern 30a und 30b begrenzenden Endflächen der Zungen 38a und 38b ein Verbindungskanal 40 vorgesehen, der sich achsparallel sowohl zur Mischkammer 23 als auch zum Verbindungskanal 29 erstreckt und dabei auch eine diesen entsprechende Querschnittsform und -abmessung hat. Über diesen Verbindungskanal 40 sind die beiden Nachmisch- bzw. Wirbelkammern 30a und 30b strömungsmäßig hintereinandergeschaltet, und zwar derart, daß die Komponentenmischung auf ihrem Weg von der Mischkammer 23 zum Führungskanal 29 viermal aufeinanderfolgend jeweils etwa rechtwinklig abgelenkt wird, damit also einen zweifachen Zick-zack-Weg durchlaufen muß.

Durch diese Ausgestaltung des Mischkopfes 21 wird die Nachvermischung bzw. Verwirbelung des Komponentengemisches gegenüber der Bauart des Mischkopfes 1 nach den Fig. 1 bis 3 weiter verbessert, und zwar ohne daß hierzu ein wesentlicher baulicher Mehraufwand erforderlich ist.

Die beiden symmetrisch zu einer Querebene durch den Schieber 33 gelegenen Nachmisch- bzw. Wirbelkammern 30a und 30b lassen sich gemeinsam und synchron in ihrem Volumen bzw. ihrer radialen Länge relativ zur Mischkammer 23 bzw. zum Führungskanal 29 zwischen einem Wert 0 und einem Größtmaß stufenlos variieren. Haben dabei die Nachmisch- bzw. Wirbelkammern 30a und 30b die Größe 0, befindet sich der Verbindungskanal 40 des Schiebers 33 in Achsfluchtlage sowohl mit der Mischkammer 23 als auch mit dem Führungskanal 29, so daß der Ausstoßkolben bzw. Reinigungsstößel 26 mit Hilfe seines Linearantriebes 27 soweit vorgeschoben werden kann, daß seine ebene Endfläche 28 bündig mit dem vorderen Ende des Führungskanals 29 zu liegen kommt. Ist jedoch der Schieber 33 so verstellt, daß der Verbindungskanal 40 keine Achsfluchtlage mit der Mischkammer 23 und dem Führungskanal 29 einnimmt, dann kann der Ausstoßkolben bzw. Reinigungsstößel 26 mit seiner ebenen Endfläche 28 lediglich bis gegen die der Austrittsöffnung 31 der Mischkammer 23 benachbarte Seitenfläche des Schiebers 33 vorwärtsbewegt werden.

In Fig. 4 der Zeichnung ist noch angedeutet, daß sich der Mischkopf 21 nicht nur zur Verarbeitung zweier Kunststoffkomponenten eignet, welche durch die Einlaßöffnungen 24 und 25 in die Mischkammer 23 eingeleitet werden, sondern daß noch die Zuführung mindestens einer weiteren Komponente, bspw. eines Gases, einer Flüssigkeit oder von Füllstoffen möglich ist. Durch die Pfeile 39a, 39b, 39c, 39d und 39e ist dabei angedeutet, daß die Zuführung der dritten und/oder auch weiteren Komponenten an mindestens fünf verschiedenen Stellen möglich ist. Dabei ist die Zuführstelle 39a der Mischkammer 23 zugeordnet, die Zuführstelle 39b mündet in die Nachmisch- bzw. Wirbelkammer 30a, während die Zuführstelle 39c dem Verbindungskanal 40 zugeordnet ist. Die Zuführstelle 39d mündet in die Nachmisch- bzw. Wirbelkammer 39d, während die Zuführstelle 39e dem Führungskanal 29 zugeordnet ist.

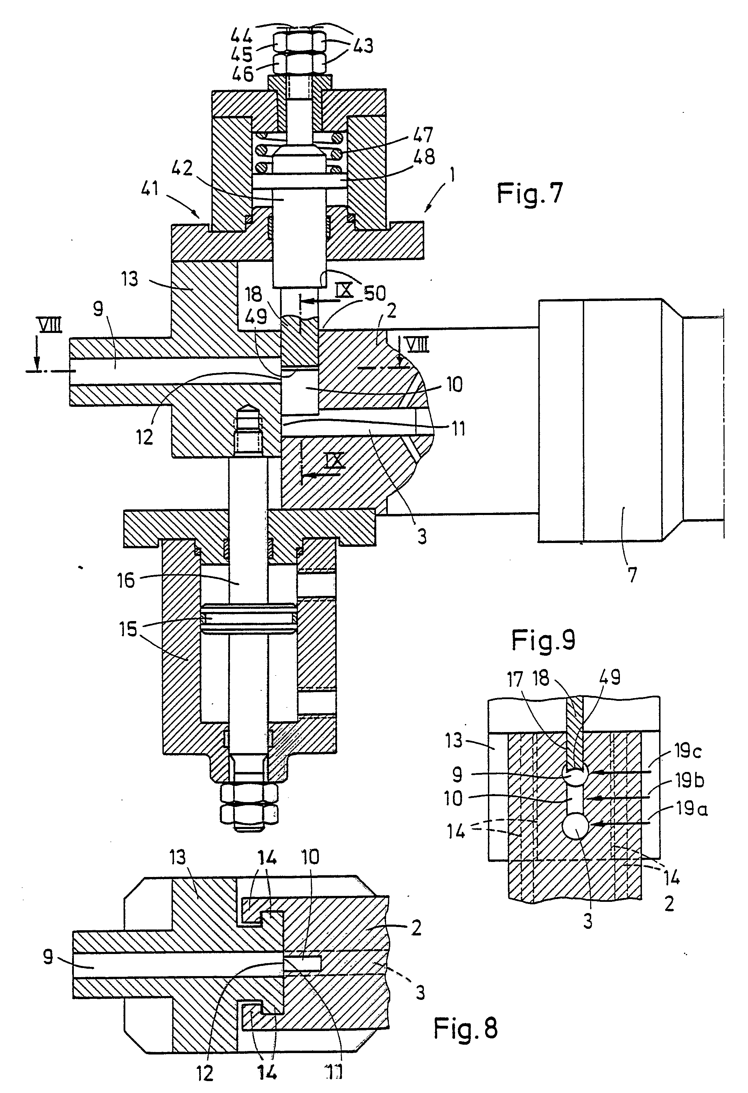

Der in den Fig. 7 bis 9 der Zeichnung dargestellte Mischkopf 1 weist grundsätzlich die gleiche Ausbildung auf und hat dementsprechend auch im wesentlichen die gleiche Wirkungsweise wie der Mischkopf 1 nach den Fig. 1 bis 3. Er wurde jedoch insofern weitergebildet, als die dem Schlitzkanal 17 der Nachmisch- bzw. Wirbelkammer 10 zugeordnete Zunge 18 mit dem Schieber 13 nicht starr in Verbindung steht, sondern vielmehr von diesem parallel zu dessen Bewegungsrichtung ein- und/oder verstellbar gehalten wird. Zu diesem Zweck ist auf den Schieber 13 eine Halterung 41 aufgesetzt, in der ein Schaft 41 parallel zur Bewegungsrichtung des Schiebers 13 verstellbar geführt wird, der an seinem unteren Ende die in den Schlitzkanal 17 der Nachmisch- bzw. Wirbelkammer 10 hineinragende Zunge 18 trägt. Durch eine Einstellvorrichtung oder eine Feststellvorrichtung 43 kann der Schaft 42 in der Halterung 41 in seiner axialen Richtung lagenjustiert werden, dergestalt, daß die Relativlage der Zunge 18 gegenüber dem Querschnitt der Eintrittsöffnung 12 zum Führungskanal 9 justierbar ist. Hierdurch läßt sich der Querschnitt der Eintrittsöffnung 12 zum Führungskanal 9 zwischen einem Größtmaß und einem Kleinstmaß, vorzugsweise stufenlos, justieren, und zwar zum Zwecke der Strömungsbeeinflussung des Komponentengemisches aus der Nachmisch- bzw. Wirbelkammer 10 in den Führungskanal 9.

Die Ein- und Feststellvorrichtung 43 besteht bspw. aus einem am hinteren Ende des Schaftes 42 sitzenden Gewindebolzen, einer sich gegen die Oberseite der Halterung 41 abstützenden Stellmutter 45 sowie einer diese zugeordneten Kontermutter 46. Innerhalb der Halterung 41 stützt sich gegen diese an einer von der Ein- und Feststellvorrichtung 43 abgewendeten Fläche ein elastisches Rückstellelement, bspw. eine Druckfeder 47 ab, welche andererseits auf einen Bund 48 des Schaftes 42 einwirkt und letzteren damit in seiner durch die Ein- und Feststellvorrichtung 43 bestimmten, unterem Endstellung fixiert.

Die der Eintrittsöffnung 12 zum Führungskanal 9 zugewendete Begrenzungskante 49 der Zunge 18 bildet von der Nachmisch- bzw. Wirbelkammer 10 zur Eintrittsöffnung 12 des Führungskanals 9 hin eine Drosselkante, die eine partielle Strömungsbeschleunigung der Komponentenmischung herbeiführt, sowie auch als Abreißkante wirkt, hinter der in der Eintrittsöffnung 12 des Führungskanals 9 eine zusätzliche Materialverwirbelung eintritt.

Wird der Schieber 13 durch den Linearantrieb 15 relativ zum Gehäuse 2 so verstellt, daß sein Führungskanal 9 in Achsfluchtlage zur Mischkammer 3 gelangt, dann trifft die Zunge 18 auf einen der Mischkammer 3 benachbarten Widerlageranschlag 15 im Gehäuse und wird durch diesen so abgestützt, daß der volle Öffnungsquerschnitt der Mischkammer 3 im Bereich seiner Austrittsöffnung 11 freibleibt. Die weitere Schieberbewegung zur Erzielung der Achsfluchtlage zwischen Mischkammer 3 und Führungskanal 9 wird jedoch hierdurch nicht behindert, weil die Druckfeder 47 gegenüber der weiteren Schieberbewegung elastisch nachgiebig ist.

Im Zusammenhang mit der Ausgestaltung des Mischkopfes 1 nach den Fig. 7 bis 9 sei noch darauf verwiesen, daß dort die Einlaßöffnungen für mindestens eine weitere Komponente eine andere Anordnung haben können, wie in Fig. 1. In Fig. 9 der Zeichnung ist die mögliche Lage dieser Einlaßöffnungen durch die drei Pfeile 19a, 19b, 19c angedeutet. Sie sind hier also nicht von oben her, sondern, seitwärts gerichtet der Mischkammer 3 der Nachmisch- bzw. Wirbelkammer 10 und dem Führungskanal 9 zugeordnet.

Die besondere Ausgestaltung des Mischkopfes 1 nach den Fig. 7 bis 9 kann im Bedarfsfalle auch bei einem Mischkopf 21 verwirklicht werden, wie er in den Fig. 5 bis 6 gezeigt ist. In diesem Falle müßte dann die Halterung 41 auf dem Schieber 33 sitzen, wobei dann eine oder jeder der beiden Zungen 38a 38b von einem Schaft 42 getragen würde, der über eine Ein- und Feststellvorrichtung 43 sowie eine Druckfeder 47 in einer der Fig. 7 entsprechenden Art und Weise mit der Halterung 41 zusammenwirkt.

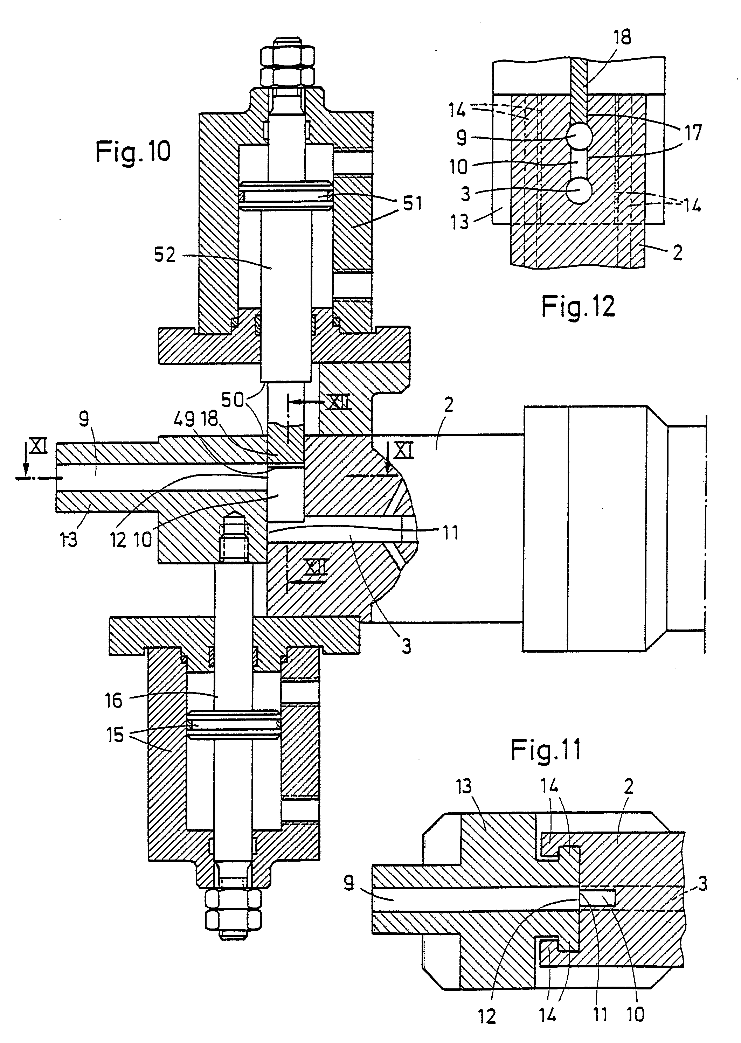

Auch in den Fig. 10 bis 12 der Zeichnung ist ein Mischkopf 1 gezeigt, der hinsichtlich seines grundsätzlichen Aufbaus und in seiner Wirkungsweise mit dem Mischkopf 1 nach den Fig. 1 bis 3 übereinstimmt.

In weiterer Ausgestaltung gegenüber dem Ausführungsbeispiel nach den Fig. 1 bis 3 ist jedoch nach den Fig. 10 bis 12 auf dem Gehäuse 2 ein Linearantrieb 51, vorzugsweise in Form einer durch Druckmittel beaufschlagbaren Kolben-Zylinder-Einheit montiert, dessen Schub- und Zugstange 52 an ihrem unteren Ende die in den Schlitzkanal 17 der Nachmisch- bzw. Wirbelkammer 10 eingreifende Zunge 18 trägt. Durch Betätigung des Linearantriebs 51 läßt sich in diesem Falle die Zunge 18 sowohl unabhängig vom Gehäuse 2 als auch unabhängig vom Schieber 13 innerhalb des Schlitzkanals stufenlos ein- und feststellen. Hierdurch ist es nicht nur möglich, das Volumen bzw. die wirksame Länge der Nachmisch- bzw. Wirbelkammer 10 zwischen der Austrittsöffnung 11 der Mischkammer 3 und der Eintrittsöffnung 12 des Führungskanals 9 zweckentsprechend zu variieren. Vielmehr kann zugleich auch die der Nachmisch- bzw. Wirbelkammer 10 zugewendete Endfläche der Zunge 48 zur Variation des Durchlaßquerschnitts der Eintrittsöffnung 12 in den Führungskanal 9 genutzt werden, indem eine gegenläufige Verstellung von Zunge 18 und Schieber 13 im jeweils gewünschten Ausmaß mit Hife der Linearantriebe 15 und 51 vorgenommen wird. Auch in Fig. 10 ist zu sehen, daß Widerlageranschläge 50 zwischen der Schub- und Zugstange 52 und dem Gehäuse 2 die End-Einschubstellung der Zunge 18 in den Schlitzkanal der Nachmisch- bzw. Wirbelkammer 10 begrenzen und damit den vollen Durchlaßquerschnitt der Mischkammer 3 in Richtung zu ihrer Austrittsöffnung 11 hin freihalten.

Es leuchtet ohne weiteres ein, daß auch die Ausgestaltungsmaßnahmen des Mischkopfes 1 nach den Fig. 10 bis 12 im Bedarsfalle bei einem Mischkopf 21 genutzt werden können, wie er in den Fig. 4 bis 6 gezeigt wird. In diesem Falle müßten dann Linearantriebe 51 mit Schub- und Zugstangen 52 der jeweiligen Zunge 38a bzw. 38b so zugeordnet werden, daß diese unabhängig vom Gehäuse 22 und vom Schieber 33 innerhalb des Schlitzkanals 37a bzw. 37b der Nachmisch- bzw. Wirbelkammern 30a und 30b verlagerbar ist.

Abschließend sei nur noch erwähnt, daß es im Rahmen der Erfindung auch durchaus denkbar ist, zur Bildung der Nachmisch- bzw. Wirbelkammeren in kinematischer Umkehrung zu den Ausführungsbeispielen der Fig. 1 bis 12 den Schlitzkanal im Schieber auszubilden und die mit diesem in Eingriff stehende Zunge dementsprechend am Gehäuse vorzusehen.

**Ansprüche**

1. Mischkopf zum Vermischen mindestens zweier bei ihrer Reaktion Schaumstoff bildender Komponenten aus Kunststoff mit einer Mischmmer, der die Kunststoffkomponenten durch Eintrittsöffnungen zugeführt werden und aus welcher das Komponentengemisch durch eine Austrittsöffnung und einen Führungskanal in eine Form gelangt, wobei sowohl der Mischkammer als auch dem an deren Austrittsöffnung anschließenden Führungskanal ein axial verschiebbarer Ausstoßkolben bzw. Reinigungsstößel zugeordnet ist,
**dadurch gekennzeichnet,**
daß Mischkammer (3 bzw. 23) und Führungskanal (9 bzw. 29) eine zueinander achsparallele Ausrichtung haben, daß zwischen der Austrittsöffnung (11 bzw. 31) der Mischkammer (3 bzw. 23) und der Eintrittsöffnung (12 bzw. 32) des Führungskanals (9 bzw. 29) sich mindestens eine Nachmisch- bzw. Wirbelkammer (10 bzw. 30a, 30b) befindet, die eine im wesentlichen quer zu den Achsen von Mischkammer (3 bzw. 23) und Führungskanal (9 bzw. 29) gerichtete Anordnung hat, und daß dabei die Länge und/oder die Lage der Nachmisch- bzw. Wirbelkammer (10 bzw. 30a, 30b) relativ zur Mischkammer (3 bzw. 23) und Führungskanal (9 bzw. 29) veränderbar sind.

2. Mischkopf nach Anspruch 1,
**dadurch gekennzeichnet,**
daß Länge und/oder Lage jeder Nachmisch- bzw. Wirbelkammer (10 bzw. 30a, 30b) durch mindestens einen quer zur Mischkammer (3 bzw. 23) verstellbaren Schieber (13 bzw. 33) veränderbar sind.

3. Mischkopf nach einem der Ansprüche 1 und 2,
**dadurch gekennzeichnet,**
daß Mischkammer (3 bzw. 23) und Führungskanal (9 bzw. 29) einen in Form und Abmessungen übereinstimmenden Querschnitt haben und ihnen ein und derselbe Ausstoßkolben bzw. Reinigungsstößel (6 bzw. 26) zugeordnet ist.

4. Mischkopf nach einem der Ansprüche 1 bis 3,
**dadurch gekennzeichnet,**
daß jede Mischkammer (10 bzw. 30a, 30b) durch einen Schlitzkanal (17 bzw. 37a, 37b) und eine in diesen verschiebbar bzw. gleitbeweglich eingreifende Zunge (18 bzw. 38a, 38b) betimmt ist.

5. Mischkopf nach einem der Ansprüche 1 bis 4,
**dadurch gekennzeichnet,**
daß der Schlitzkanal (17 bzw. 37a, 37b) sich in Radialrichtung an die Austrittsöffnung (11 bzw. 31) der Mischkammer (3 bzw. 23) bspw. im Gehäuse (2 bzw. 22) anschließt, während die Zunge (18 bzw. 38a, 38b) in radialem Anschluß an den Querschnitt des Führungskanals (9 bzw. 29), z.B. am Schieber (13 bzw. 33) über dessen Eintrittsöffnung (12 bzw. 32) vorspringt.

6. Mischkopf nach einem der Ansprüche 1 bis 5,
**dadurch gekennzeichnet,**
daß die Mischkammer (3) sich in einem Gehäuse (2) befindet, während der Führungskanal (9) in dem relativ zu diesem Gehäuse (2) verstellbaren Schieber (13) angeordnet ist (Fig. 1 bis 3 und 7 bis 9).

7. Mischkopf nach einem der Ansprüche 1 bis 5,
**dadurch gekennzeichnet,**
daß die Mischkammer (23) und der Führungskanal (29) sich in einem Gehäuse (22) befinden und darin Achsfluchtlage zueinander haben, während der Schieber (33) lediglich einen dazu achsparallelen Verbindungskanal (40) enthält, über den zwischen der Mischkammer (23) und dem Führungskanal (29) zwei Nachmischkammern (30a und 30b) hintereinanderschaltbar sind (Fig. 4 bis 6).

8. Mischkopf nach Anspruch 7,
**dadurch gekennzeichnet,**
daß die beiden Nachmischkammern (30a und 30b) symmetrisch zu einer Querebene des Schiebers (33) angeordnet sind, wobei sich eine (30a) derselben radial an die Austrittsöffnung (31) der Mischkammer (23) anschließt, während die andere (30b) radial in die Eintrittsöffnung (32) des Führungskanals (29) einmündet (Fig. 4 bis 6).

9. Mischkopf nach einem der Ansprüche 1 bis 8,
**dadurch gekennzeichnet,**
daß der Schieber (13 bzw. 33) durch einen am Gehäuse (2 bzw. 22) gehaltenen Linearantrieb (15 bzw. 35), insbesondere eie mit Druckmittel beaufschlagbare Kolben-Zylinder-Einheit, verstellbar ist (Fig. 1, 4, 7, 10).

10. Mischkopf nach Anspruch 9,
**dadurch gekennzeichnet,**
daß der Linearantrieb (15 bzw. 35) für den Schieber (13 bzw. 33) außer in seinen beiden Endlagen auch in verschiedenen, vorzugsweise beliebigen Zwischenstellungen blockierbar ist (Fig. 1, 4, 7, 10).

11. Mischkopf nach einem der Ansprüche 1 bis 10,
**dadurch gekennzeichnet,**
daß die Zunge (18 bzw. 38a, 38b) der oder jeder Nachmischkammer (10 bzw. 30a, 30b) relativ zum Schieber (13 bzw. 33) und parallel zu dessen Bewegungsrichtung ein-und/oder verstellbar angeordnet ist (41 bis 48; Fig. 7 bzw. 51, 52; Fig. 10).

12. Mischkopf nach Anspruch 11,
**dadurch gekennzeichnet,**
daß die Zunge (18) am Schieber (13) relativ zur Eintrittsöffnung (12) des Führungskanals (9) ein-und/oder verstellbar angeordnet ist (Fig. 7 unf 9).

13. Mischkopf nach einem der Ansprüche 11 und 12,
**dadurch gekennzeichnet,**
daß durch die Zunge (18) der Querschnitt der Eintirttsöffnung (12) des Führungskanals (9) veränderbar ist (Fig. 7 und 10).

14. Mischkopf nach einem der Ansprüche 11 bis 13,
**dadurch gekennzeichnet,**
daß die Zunge (18) in ihrer jeweiligen Einstellage zur Eintrittsöffnung (12) des Führungskanals (9) im Sinne einer Vergrößerung des Öffnungsquerschnittes elastisch nachgiebig, insbesondere federnd (47), am Schieber (13) abgestützt ist (41, 42, 48).

15. Mischkopf nach einem der Ansprüche 11 bis 14,
**dadurch gekennzeichnet,**
daß der Zunge (18) der oder jeder Nachmischkammer (10) am Gehäuse (2) ein Widerlageranschlag (50) zugeordnet ist, der die Zunge (18) im Bereich zwischen der Mischkammer (3) und dem Führungskanal (9) außerhalb der Bewegungsbahn des Ausstoßkolbens bzw. Reinigungsstößels (6) hält (Fig. 7 und 10).

16. Mischkopf nach einem der Ansprüche 1 bis 4,
**dadurch gekennzeichnet,**
daß die Zunge (18) der oder jeder Nachmischkammer (10) einen Teil eines zweiten Schiebers (52) bildet und mittels diesem im Schlitzkanal (17) unabhängig von der Betätigung des ersten Schiebers (13) verlagerbar ist.

17. Mischkopf nach Anspruch 16,
**dadurch gekennzeichnet,**
daß der zweite Schieber (52) durch einen eigenen am Gehäuse (2) gehaltenen Linearantrieb (51), insbesondere eine mit Druckmittel beaufschlagbare Kolben-Zylinder-Einheit, betätigbar ist (Fig. 10).

18. Mischkopf nach einem der Ansprüche 16 und 17,
**dadurch gekennzeichnet,**
daß der zweite Linearantrieb (51) für den Schieber (52) außer in seinen beiden Endlagen auch in verschiedenen, vorzugsweise beliebigen Zwischenstellungen blockierbar ist (Fig. 10).

19. Mischkopf nach einem der Ansprüche 16 und 18,
**dadurch gekennzeichnet,**
daß durch die Zunge (18) der Querschnitt der Eintrittsöffnung (12) des Führungskanals (9) veränderbar ist (Fig. 10).

20. Mischkopf nach einem der Ansprüche 16 und 19,
**dadurch gekennzeichnet,**
daß die Zunge (18) der oder jeder Nachmisch- bzw. Wirbelkammer (10) am Gehäuse (2) ein Widerlageranschlag (50) zugeordnet ist, der die Zunge (18) im Bereich zwischen der Mischkammer (3) und dem Führungskanal (9) außerhalb der Bewegungsbahn des Ausstoßkolbens bzw. Reinigungsstößels (6) hält (Fig. 10).

EP 0 306 832 A2

Fig. 1

Fig. 3

Fig. 2

Fig.4

Fig.5

Fig.6

Fig.7

Fig.9

Fig.8

Fig.10

Fig.12

Fig.11